(19) Europäisches Patentamt
European Patent Office
Office européen des brevets

(11) **EP 4 116 452 A1**

(12) **EUROPEAN PATENT APPLICATION**
published in accordance with Art. 153(4) EPC

(43) Date of publication:
**11.01.2023 Bulletin 2023/02**

(21) Application number: **21762323.0**

(22) Date of filing: **21.05.2021**

(51) International Patent Classification (IPC):
*C22C 9/02* (2006.01)          *C22F 1/00* (2006.01)
*C22F 1/08* (2006.01)          *A01P 3/00* (2006.01)
*A01N 59/16* (2006.01)        *A01N 59/20* (2006.01)
*A01N 59/26* (2006.01)

(52) Cooperative Patent Classification (CPC):
**C22C 9/02; A01N 59/20; A01P 1/00; C22F 1/08**

(86) International application number:
**PCT/JP2021/019382**

(87) International publication number:
**WO 2022/244244 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Harada Metal Industry Co., Ltd.
Toda-shi, Saitama 3350023 (JP)**

(72) Inventors:
• **HARADA, Mario**
  **Saitama (JP)**
• **TANIGUCHI, Moriya**
  **Saitama (JP)**

(74) Representative: **LKGLOBAL
Lorenz & Kopf PartG mbB Patentanwälte
Brienner Straße 11
80333 München (DE)**

(54) **PHOSPHOR BRONZE ALLOY AND ARTICLE USING SAME**

(57)    A phosphor bronze alloy having highly antibacterial properties comprising 1.08% by weight of tin and 0.094% by weight of phosphorus, wherein a remainder comprises copper and unavoidable impurities, a rolling process and an annealing treatment are performed, a thickness after rolling is no less than 0.197 mm and no more than 1.17 mm, a Vickers hardness is no less than 55 HV and no more than 120 HV, and a crystal particle diameter is no less than 200 $\mu$m and no more than 800 $\mu$m.

[FIG. 4]

EP 4 116 452 A1

**Description**

[Field of Invention]

The present invention relates to a phosphor bronze alloy having highly antibacterial properties and an article using such.

[Background Art]

It is conventionally known that copper, silver, tin, and the like have bactericidal and antibacterial properties and are used in various fields. It is said that the reason why these metals exhibit bactericidal and antibacterial properties is that ions generated by dissolving in water destroy the cell walls and cell membranes of microorganisms and bind to enzymes and proteins to reduce their activity and metabolic function. In addition, it is said that another factor in the bactericidal and antibacterial properties thereof is that the electrons emitted at the time of ionization activate a part of the oxygen dissolved in air or water to form active oxygen, which chemically attacks the organic matter in the microorganisms.

On the other hand, phosphor bronze is a copper alloy containing tin and is used in electronic parts and various electric products because it has excellent mechanical strength, conductivity, and workability. Since it has excellent workability, it is easy to process into a shape suitable for application.

To outline an example of the use of copper alloys in fields that require bactericidal and highly antibacterial properties, socks to which are imparted an effect of preventing athlete's foot by interweaving copper wire therein can be given as an example. Further, patent literature 1 discloses a filtration apparatus for filtering an aqueous washing liquid using a wire mesh consisting of a metal such as copper or silver.

In addition, patent literature 2 discloses an antibacterial deodorant composed of titanium oxide particles carrying a deodorizing antibacterial component selected from silver, copper, zinc, tin, and the like, and an amine compound. However, none of these are directly touched by human hands, and in fact, none can be found that are intended to be touched directly by the hand such as handrails attached to the passages of medical institutions and that require a high degree of bactericidal properties or highly antibacterial properties.

The reasons for this include that phosphor bronze has not been clearly shown to exhibit higher antibacterial properties than pure copper, and that copper and copper alloys are prone to discoloration due to contacting the human body. However, in patent literature 3, as disclosed by the present inventors, it is found that the phosphor bronze rolled material has higher antibacterial properties than pure copper.

[Prior Art Literature]

[Patent Literature]

[Patent Literature 1] JP 2010-137353 A
[Patent Literature 2] JP 2009-268510 A
[Patent Literature 3] Japanese Patent No. 5656138

[Summary of Invention]

[Problem to be Solved by Invention]

The problem to be solved by the present invention is to verify the antibacterial mechanism of a copper alloy, clarify the highly antibacterial property of a phosphor bronze plate-like product and the manufacturing conditions, methods, and the like thereof, diversify the applications in which the highly antibacterial properties of phosphor bronze can be utilized, and expand the proposal.

[Means for Solving Problem]

In light of the above problems, the present invention has been accomplished by confirming the amplification of antibacterial properties as a result of ingenuous study on that considered to be parameters of the amplification of antibacterial properties, by, for example, changing the number of rolling times (number of passes), performing high-temperature annealing for final finishing and then slowly cooling instead of quenching, and the like when manufacturing the phosphor bronze plate-like product.

That is, the present invention is a phosphor bronze alloy having highly antibacterial properties, containing 1.08% by weight of tin and 0.094% by weight of phosphorus, wherein:

a remainder is composed of copper and unavoidable impurities,
a rolling process and an annealing treatment are performed,
a thickness after rolling is no less than 0.197 mm and no more than 1.17 mm,
a Vickers hardness is no less than 55 HV and no more than 120 HV, and
a crystal particle diameter is no less than 200 μm and no more than 800 μm.

[Effect of Invention]

According to the present invention, it is possible to provide a phosphor bronze alloy having highly antibacterial properties and an article using such.

[Brief Description of Drawings]

FIG. 1 is a photo showing an example of the halo test of the present invention.
FIG. 2A is an observed image of the surface of the phosphor bronze alloy (2A).
FIG. 2B is an observed image of the surface of the phosphor bronze alloy (2A).
FIG. 2C is an observed image of the surface of the phosphor bronze alloy (4A).
FIG. 2D is an observed image of the surface of the phosphor bronze alloy (5A).
FIG. 2E is an observed image of the surface of the phosphor bronze alloy (No. 8) of the present invention.
FIG. 3 shows the Cu and Sn elution amount of the phosphor bronze alloy of the present invention (Table 1 is graphed).
FIG. 4 is an antibacterial test of the phosphor bronze alloy sample of the present invention and a repeatedly rolled copper alloy sample.
FIG. 5 is a perspective view showing an example in which the phosphor bronze alloy thin plate of the present invention is attached to the surface of a handrail.

[Embodiments of Invention]

According to (patent literature 3, Japanese Patent No. 5656138), the present inventors have already found in " patent literature 3 " that a phosphor bronze alloy plate-like product can realize remarkable antibacterial properties when the tin content thereof is 1.08% by weight and the phosphorus content thereof is 0.094% by weight as a result of testing the antibacterial property experiment on a phosphor bronze alloy through a microorganism culture test. However, patent literature 3 has not clarified the antibacterial properties of the phosphor bronze alloy plate-like product obtained by reducing the number of rolling times, performing high-temperature annealing for final finishing, and then slowly cooling instead of quenching.

Herein, we searched for and studied the factors that amplify antibacterial properties, and as a result, newly found a mechanism of antibacterial property amplification that further amplifies the discovered antibacterial properties, thereby accomplishing the present invention.

Generally, as one of the antibacterial factors of copper and the like, as described above, it is considered that the electrons emitted when a metal is ionized activate a part of the oxygen dissolved in air or water. In the phosphor bronze alloy, it is understood that such a result is connected to a transfer of electrons occurring between each component due to differences in ionization potential and associated ionization tendencies of the components that constitute the alloy, by changing a defined number of rolling times and annealing, drying, and cooling conditions, such as by reducing the number of rolling times. It was found that antibacterial properties were amplified by a small number of rolling times of six to 11 times, and a high-temperature annealing, a cooling process, and the like performed thereafter, as compared to a general number of rolling times of 15 to 20 times.

The main reason for this is that when the rolling and annealing conditions are different, disorder and the like of the size of the crystal particle diameter and the crystal particle boundaries occur. The present inventors focused on this phenomenon, and by examining various conditions, unconventional amplified antibacterial properties were obtained.

The phosphor bronze alloy of the present invention contains 1.08% by weight of tin and 0.094% by weight of phosphorus, and the remainder is composed of copper and unavoidable impurities.

Here, tin, phosphorus, copper, and unavoidable impurity content in the phosphor bronze alloy can be measured by emission spectrophotometry. Emission spectrophotometers manufactured by Shimadzu can be given as examples of a measuring device.

Pb, Be, Co, Si, Ni, S, Zn, Fe, and Al are examples of unavoidable impurities.

Additionally, scattering of analytical results due to the analytical device and analysis conditions is extremely small in the emission spectroscopic analysis of the phosphor bronze alloy. The present inventors have validated that identical results regarding the composition ratio described in the present specification can be obtained when emission spectral analysis of two identical test specimens of the phosphor bronze alloy having differing analysis conditions is performed.

The phosphor bronze alloy is subjected to a rolling process and an annealing treatment.

The thickness of the phosphor bronze alloy after rolling is no less than 0.197 mm and no more than 1.17 mm.

The Vickers hardness of the phosphor bronze alloy which is subjected to the rolling process and annealing treatment is no less than 55 HV and no more than 120 HV.

The crystal particle diameter of the phosphor bronze alloy is no less than 200 $\mu$m and no more than 800 $\mu$m.

Here, the thickness of the phosphor bronze alloy is an arithmetic mean value of 10 measured places. Vickers hardness (unit: HV) is one metric that expresses hardness and is a type of indentation hardness. The test substance to be tested is indented at a fixed test force using a rigid body (indenter) composed of diamond, and the Vickers hardness (HV) is determined by the below equation from an area [S (mm$^2$)] of the dent (impression) made thereby and the test force [F (kgf)].

$$HV = F/S$$

In the present invention, the indenter used when measuring the Vickers hardness is a pyramid-shaped indenter made of diamond, and the indenting force (test force) is 30 kgf.

Here, the crystal particle diameter is measured using an electron microscope. Specifically, the surface of the phosphor bronze alloy is observed through an electron microscope and the diameters of the circumscribed circles of the crystal particles is determined. Furthermore, the arithmetic mean value of any 100 of the circumscribed circles of the crystal particles is the "crystal particle diameter".

In the rolling process, a rolling process in which a compression rate of one pass (the number of plate passes in the rolling mill) is set to no less than 30% and no more than 31% is performed no less than six passes and no more than 11 passes, and it is preferable that a total compression rate is no less than 88.3% and no more than 98.03%.

Here, the compression rate (%), also called the reduction ratio, is calculated by the equation below.

$$\text{Compression rate (\%)} = [(A - B) / A] \times 100$$

A: Thickness before rolling process
B: Thickness after rolling process

For example, if the thickness before the rolling process is 1 mm and the thickness after the rolling process is 0.7 mm, the compression rate (%) becomes [(1 - 0.7) / 1] $\times$ 100 = 30%. When the phosphor bronze alloy having a thickness of 0.7 mm is further subjected to the rolling process, if the same compression rate of 30% were to be obtained, the thickness after the rolling process would become 0.49 mm

The annealing treatment is preferably carried out by holding at a temperature range of no less than 700°C and no more than 900°C for no less than two hours and no more than four hours and then cooling slowly.

An article of the present invention is made by coating at least a part thereof using the phosphor bronze alloy plate having highly antibacterial properties.

In other words, the hardness of the phosphor bronze alloy that has been subjected to the rolling process and annealing treatment is a O material (O material tempered) or a 1/4H material (material tempered to 1/4 H. H represents Hardness = hardness, Vickers hardness: HV = Vickers Hardness (unit: N/mm$^2$)). Moreover, in other words, the hardness of the phosphor bronze alloy is no less than the lower limit of hardness of the O material = 55 HV and no more than the upper limit of the 1/4 H material = 120 HV.

The rolling process and annealing treatments during manufacturing are performed, for example, as follows.

The initial thickness of the phosphor bronze alloy before rolling is 10 mm, and the thickness of the phosphor bronze alloy after passes through the rolling mill is no more than 1.17 mm after six passes and no less than 0.197 mm after 11 passes (the passes number is changed to expand the application). Then, the Vickers hardness after rolling and annealing is set to no less than 55 HV and no more than 120 HV.

Next, the embodiment of the present invention will be described by describing the antibacterial property tests accompanying changes in the rolling and annealing conditions of the present phosphor bronze alloy.

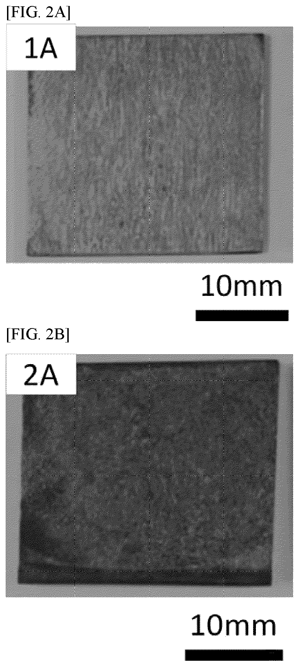

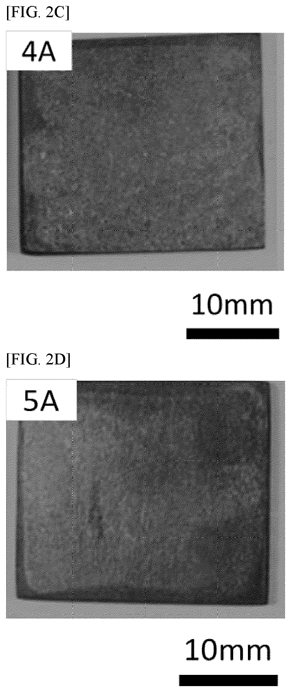

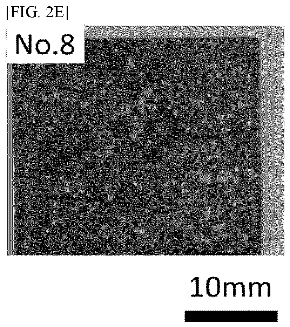

First, electrolytic copper, tin, and phosphorus are melted and cast in an ordinary manner, and five types of ingots, 1A, 2A, 4A, 5A, and No. 8 are obtained. The target compositions of the samples shown in FIG. 2A to FIG. 2E are shown in Table 1.

The target composition of phosphorus in No. 8 is slightly different from that of the four, 1A, 2A, 4A, and 5A, but antibacterial properties are not affected. As such, a phosphorus value of around 0.10% was changed to 0.03 to 0.04%.

For 1A to 5A, the number of rolling times (number of passes) of the ingot is 14 to 19 times, intermediate annealing is done two to four times (final annealing was not performed), and rolling and annealing are repeated to a thickness of 1.17 mm, and n = 3 for each. In No. 8, tin is 1.08% by weight, and phosphorus is 0.094% by weight. The number of rolling times for this ingot was six passes, and high-temperature annealing (700 to 900°C) and then slow cooling were performed. The thickness thereof is 1.17 mm as in the above four types of targets, and the number of samples is also n = 3.

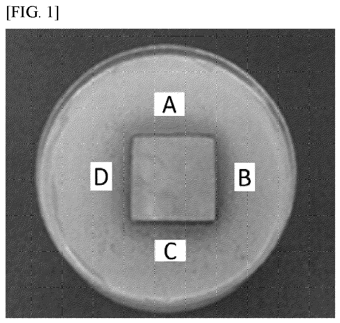

From the five types of rolled plates and annealed plates, three pieces each having dimensions of 1.17 mm × 28 mm × 28 mm, for a total of 15 pieces (n = 3, 5 × 3 = 15), were arbitrarily cut out, and the halo test according to JIS L 1902 was performed. Three types of bacteria were used in the test, *Staphylococcus aureus, Escherichia coli,* and *Pseudomonas aeruginosa,* but only *Staphylococcus aureus* was used for some, while the three types of bacteria, *Staphylococcus aureus, Escherichia coli,* and *Pseudomonas aeruginosa* were used for others. FIG. 1 is a photo showing an example of the halo test, and an example of *Staphylococcus aureus* is shown here.

In FIG. 1, the maximum halo widths and averages of the four sides (A, B, C and D) were as follows.

A: 1 mm

B: 1 mm

C: 2 mm

D: 1 mm

Average: 1.25 mm

In the same manner, using the same number of samples, experiments investigating the eluted amounts of Sn and Cu were also conducted. Quantitative analysis of eluted Sn and Cu by ICP-MS (ICP-Mass-Spectrometry, ICP mass spectrometry) was performed in an applied solvent (artificial sweat <sodium chloride 20 g/L, ammonium chloride 17.5 g/L, urea 5 g/L, acetic acid 2.5 g/L, and lactic acid 15 g/L> and sodium hydroxide which was added until the pH becomes 4.7). The results are shown in Table 1.

In the halo test, the bacteria were cultured in a petri dish, and the specimen was placed in the center to incubate for a certain period of time. Then, the width of the area wherein the bacteria around the test piece have disappeared, called the halo, was measured. In the test, three different specimens were used for each of the four time axes. As shown by A, B, C, and D in FIG. 1, the halo width is measured on four sides of the test piece, so the measurement was performed 12 times for one condition.

Regarding the elution test, quantitative analysis of eluted Sn and Cu by ICP-MS was also performed three times for one condition, and the average value was calculated and shown in Table 1 together with the target composition of the sample.

[Table 1]

| | Sample No. | Composition Ratio (Wt %) | | | ICP-MS Elution Amount (mg/L) | |
|---|---|---|---|---|---|---|
| | | Sn | P | Cu | Sn | Cu |
| Rolled Product | 1A | 0.930 | 0.024 | 99.00 | 8.6 | 1300 |
| | 2A | 0.970 | 0.029 | 99.00 | 10 | 1400 |
| | 4A | 0.970 | 0.029 | 99.00 | 12 | 1500 |
| | 5A | 1.130 | 0.036 | 98.80 | 11 | 1400 |
| Annealed/Slow Cooled | No. 8 | 1.080 | 0.094 | 98.800 | 15 | 1900 |

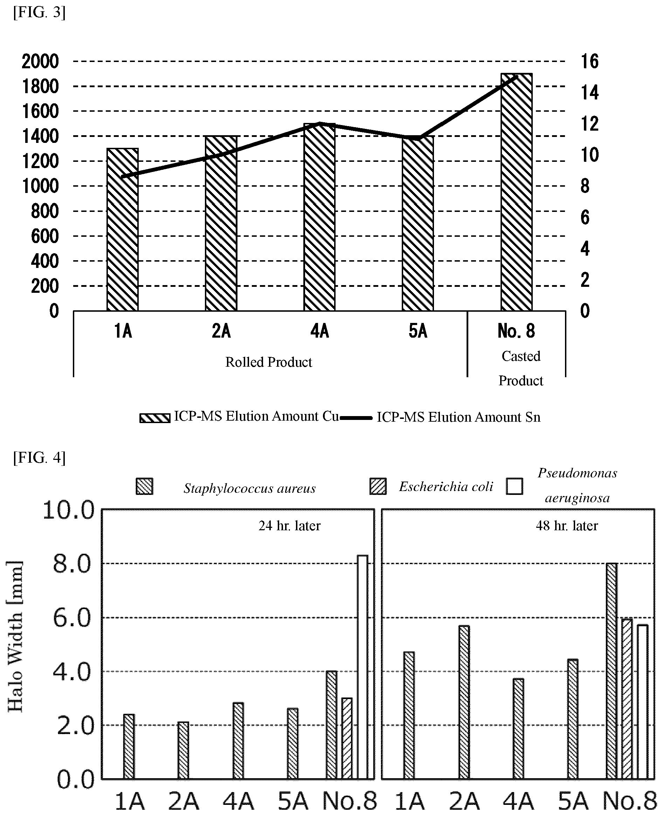

FIG. 3 is a diagram summarizing the average value (5 × 4 places × 3 (n = 3)) of 60 measurements of the halo width for each of the two types of rolling and annealing conditions (4 pieces to one piece, n = 3) of the phosphor bronze alloy used in the test, which have different rolling and annealing conditions. Further, FIG. 4 is a diagram showing the results of the halo test, in which the horizontal axis represents the type, rolling, and annealing (including slow cooling) conditions of the sample, and the vertical axis represents the halo width.

In FIG. 2A to FIG. 2E, the copper alloy organization and precipitates are observed. From the surface appearance after the immersion test, it is clear that the precipitation form and the crystal particle diameter are different for each sample. Table 1 shows the results of the elution amounts of Sn and Cu of the five types of copper alloys by ISP-MS, and FIG. 4 shows the evaluation results of the antibacterial properties.

As shown in Table 1 and FIG. 4, within the range of the present test conditions, a large difference in antibacterial properties is observed due to the difference in the two rolling and annealing (including slow cooling) conditions. That is, a clear difference is observed in the two types having different rolling and annealing conditions, and similarly, a large difference may be observed in the Cu and Sn elution amounts as shown in FIG. 3.

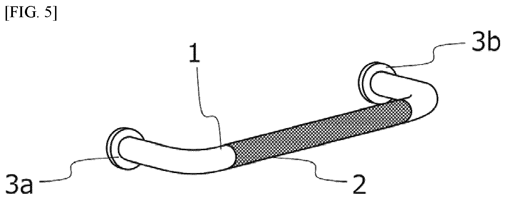

FIG. 5 is a perspective view illustrating a handrail around the surface of which the phosphor bronze alloy thin plate of the present invention is wound as an example of an article having antibacterial properties. In FIG. 5, 1 is a handrail, 2 is a phosphor bronze alloy thin plate, and 3a and 3b are flanges for mounting the handrail 1 on a wall surface. As shown here, the phosphor bronze alloy thin plate is used to cover the parts that are directly touched by the hands, such as handrails and doorknobs, at the passages and entrances of medical institutions and nursing care facilities for the elderly, thereby the spread of infectious diseases may be prevented in advance.

The prevention of discoloration of the phosphor bronze alloy may, using various methods, be dealt with by selecting a method for roughening the surface to make it difficult to see and a coating method having little effect on the antibacterial properties even if the surface is coated.

It is considered that this phosphor bronze alloy having antibacterial properties can proactively prevent the spread of infectious diseases or the like by covering handrails, doorknobs, and other parts that are directly touched by the hands in medical institutions and the like, and in addition, the present product may be used for areas that are likely to be touched by an unspecified number of people, such as interiors, exteriors, and handrails at airports, piers, and the like, and thereby may contribute to shoreline operations for infectious diseases.

As described above, according to the present invention, it is possible to provide a phosphor bronze alloy having excellent antibacterial properties. It should be noted that the present invention is not limited to the above-described embodiments, and it goes without saying that the present invention includes various variations and modifications that can be conceived by a person having ordinary skill in the art of the present invention, even if there is a design change within a scope that does not deviate from the essential aim of the present invention.

**Claims**

1. A phosphor bronze alloy having highly antibacterial properties comprising 1.08% by weight of tin and 0.094% by weight of phosphorus, wherein:

   a remainder comprises copper and unavoidable impurities,
   a rolling process and an annealing treatment are performed,
   a thickness after rolling is no less than 0.197 mm and no more than 1.17 mm,
   a Vickers hardness is no less than 55 HV and no more than120 HV, and
   a crystal particle diameter is no less than 200 $\mu$m and no more than 800 $\mu$m.

2. The phosphor bronze alloy having highly antibacterial properties according to claim 1, wherein:

   the rolling process is performed in no less than six passes and no more than 11 passes for a rolling process in which a compression rate for one pass is set to no less than 30% and no more than 31%, and has a total compression rate of no less than 88.3% and no more than 98.03%; and
   the annealing treatment is carried out by holding at a temperature range of no less than 700°C and no more than 900°C for no less than two hours and no more than four hours and then slowly cooling.

3. An article wherein at least a part thereof is coated using the phosphor bronze alloy plate having highly antibacterial properties according to claim 1 or 2.

[FIG. 1]

[FIG. 2A]

[FIG. 2B]

[FIG. 2C]

4A

10mm

[FIG. 2D]

5A

10mm

[FIG. 2E]

10mm

[FIG. 3]

ICP-MS Elution Amount Cu ━━ ICP-MS Elution Amount Sn

[FIG. 4]

[FIG. 5]

## INTERNATIONAL SEARCH REPORT

| International application No. |
| --- |
| PCT/JP2021/019382 |

**A.   CLASSIFICATION OF SUBJECT MATTER**
Int.Cl. C22C9/02(2006.01)i, C22F1/00(2006.01)i, C22F1/08(2006.01)i,
A01P3/00(2006.01)i, A01N59/16(2006.01)i, A01N59/20(2006.01)i,
A01N59/26(2006.01)i
FI: C22C9/02, C22F1/08J, C22F1/00630C, A01N59/16Z, A01N59/20Z, A01N59/26,
A01P3/00, C22F1/00613, C22F1/00623, C22F1/00640Z, C22F1/00673,
C22F1/00681, C22F1/00682, C22F1/00683, C22F1/00684C, C22F1/00685Z,
C22F1/00686B, C22F1/00691B, C22F1/00691C, C22F1/00692Z, C22F1/00694A
According to International Patent Classification (IPC) or to both national classification and IPC

**B.   FIELDS SEARCHED**

Minimum documentation searched (classification system followed by classification symbols)
Int.Cl. C22C9/02, C22F1/00, C22F1/08, A01P1/00, A01P3/00, A01N59/16-
59/20, A01N59/26, A01N25/00-25/34, B21B1/00, B21B3/00, B21B27/00

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2017-87219 A (DOWA METALTECH KK) 25 May 2017 (2017-05-25), entire text | 1-3 |
| A | JP 2010-65270 A (KOBE STEEL, LTD.) 25 March 2010 (2010-03-25), entire text | 1-3 |
| A | JP 2011-168846 A (KOBE STEEL, LTD.) 01 September 2011 (2011-09-01), entire text | 1-3 |
| A | JP 2015-214528 A (HARADA METAL INDUSTRY CO., LTD.) 03 December 2015 (2015-12-03), entire text | 1-3 |
| A | JP 2-173228 A (NIPPON MINING CO., LTD.) 04 July 1990 (1990-07-04), entire text | 1-3 |

☒ Further documents are listed in the continuation of Box C.          ☒ See patent family annex.

| | |
| --- | --- |
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 20 July 2021 | 03 August 2021 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/019382 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 4-56755 A (NIPPON MINING CO., LTD.) 24 February 1992 (1992-02-24), entire text | 1-3 |
| A | JP 2019-89752 A (HARADA METAL INDUSTRY CO., LTD.) 13 June 2019 (2019-06-13), entire text | 1-3 |
| A | JP 2019-65375 A (HARADA METAL INDUSTRY CO., LTD.) 25 April 2019 (2019-04-25), entire text | 1-3 |

Form PCT/ISA/210 (second sheet) (January 2015)

| INTERNATIONAL SEARCH REPORT<br>Information on patent family members | International application No.<br>*PCT/JP2021/019382* |
|---|---|

| | | |
|---|---|---|
| JP 2017-87219 A | 25 May 2017 | US 2017/0122681 A1<br>entire text<br>DE 102016120848 A1<br>CN 106624682 A<br>TW 201718122 A |
| JP 2010-65270 A | 25 March 2010 | (Family: none) |
| JP 2011-168846 A | 01 September 2011 | (Family: none) |
| JP 2015-214528 A | 03 December 2015 | (Family: none) |
| JP 2-173228 A | 04 July 1990 | (Family: none) |
| JP 4-56755 A | 24 February 1992 | (Family: none) |
| JP 2019-89752 A | 13 June 2019 | (Family: none) |
| JP 2019-65375 A | 25 April 2019 | (Family: none) |

Form PCT/ISA/210 (patent family annex) (January 2015)

**EP 4 116 452 A1**